# EUROPÄISCHE PATENTSCHRIFT

(11) **EP 2 753 454 B1**
(45) Veröffentlichungstag und Bekanntmachung des Hinweises auf die Patenterteilung: **30.10.2019**
(21) Anmeldenummer: 12756457.3
(22) Anmeldetag: 06.09.2012
(51) Int. Cl.: B23Q 3/157

(54) **WERKZEUGMASCHINE**
MACHINE TOOL
MACHINE-OUTIL

(30) Priorität: 09.09.2011 DE 102011053455
(43) Veröffentlichungstag der Anmeldung: 16.07.2014
(73) Patentinhaber: MAG IAS GmbH, 73054 Eislingen (DE)
(72) Erfinder: ABELN, Tobias, 70599 Stuttgart (DE); POMPE, Walter, 73333 Gingen/Fils (DE); ELL, Benedikt, 73312 Geislingen (DE); GUNZENHAUSER, Markus, 89558 Böhmenkirch (DE); HOMMEL, Gerhard, 73121 Geislingen (DE)
(74) Vertreter: Hoeger, Stellrecht & Partner Patentanwälte mbB
(86) Internationale Anmeldenummer: PCT/EP2012/067368
(87) Internationale Veröffentlichungsnummer: WO 2013/034620

(56) Entgegenhaltungen:
- DD-A1- 258 580
- DE-A1- 2 239 774
- DE-U1- 20 118 456
- DE-U1- 20 306 087
- JP-A- S56 163 857
- US-A1- 2010 145 498

## Beschreibung

Die Erfindung betrifft eine Werkzeugmaschine.

Die US 2010/0145498 A1 offenbart eine Werkzeugmaschine, welche ein erstes Werkzeuglager, ein zweites Werkzeuglager und einen Werkzeugtransfermechanismus zum Transfer von Werkzeugen zwischen dem ersten Werkzeuglager und dem zweiten Werkzeuglager umfasst.

Die DD 258 580 A1 offenbart ein Werkzeugwechselsystem einer NC-Werkzeugmaschine.

Die DE 203 06 087 U1 offenbart eine Werkzeugmaschine mit einem Werkzeug-Magazin, das eine endlose, mit Werkzeug-Aufnahmen versehene, umlaufend antreibbare Kette aufweist.

Die DE 2 239 774 offenbart eine Werkzeugmaschine, bestehend aus einer Bearbeitungsstation und einem Werkzeugmagazin, wobei ein Hauptmagazin und ein Nebenmagazin vorgesehen sind und das Nebenmagazin zwecks Entfernung aus dem Bereich der Bearbeitungsstation verfahrbar ausgebildet ist und die Werkzeugmittellinie mit der Ständerführungsbahn in den Wechselstellungen über Mittel in jedem Fall eine orthogonale Trajektorie bildet.

Aus der JP 56163857 ist ein Werkzeugmagazin bekannt, welches einen Werkzeugaustauscharm aufweist.

Aus der DE 90 14 433 U1 ist eine Werkzeugmaschine für die spangebende Bearbeitung mittels drehender Werkzeuge bekannt. Es ist ein Werkzeugwechsler mit einem Doppelgreifer vorgesehen.

Aus der DE 201 18 456 U1 ist eine Werkzeugmaschine bekannt, bei der jeder Arbeitsspindel eine separate Werkzeugwechseleinrichtung mit einem Scheibenmagazin zugeordnet ist, wobei die Scheibenmagazine jeweils an einem entsprechenden Maschinenständer angeordnet sind.

Aus der DE 10 2009 041 075 A1 ist ein Bearbeitungszentrum in Gantry-Bauform mit einem zwischen den Seitenwandungen eines U-förmigen Maschinengestells angeordneten Werkzeugmagazins mit verfahrbaren Werkzeughaltern und einem seitlich außen am U-förmigen Maschinengestell angeordneten, modular aufgebauten Werkzeugregalmagazin in Raumportalbauweise mit stationär angebrachten Werkzeughaltern sowie einem zwischen dem Werkzeugmagazin und dem Werkzeugregalmagazin vorgesehenen Werkzeugübergabeplatz bekannt.

Aus der DE 87 16 086 ist ein Zusatzmagazin für programmgesteuerte Werkzeugmaschinen bekannt.

Der Erfindung liegt die Aufgabe zugrunde, eine Werkzeugmaschine der eingangs genannten Art bereitzustellen, bei der sich ein zeiteffektiver Werkzeugaustausch an der mindestens einen Werkzeugspindel mit kurzen Span-zu-Span-Zeiten erreichen lässt.

Diese Aufgabe wird bei der eingangs genannten Werkzeugmaschine erfindungsgemäß mit den Merkmalen gemäß Anspruch 1 gelöst.

Die erfindungsgemäße Werkzeugmaschine weist grundsätzlich zwei Typen von Werkzeuglagern auf, nämlich als erstes Magazin die Lagereinrichtung am Maschinengestell. Diese bildet ein Hintergrundmagazin für Werkzeuge. Ferner ist mindestens ein Scheibenlager vorgesehen, welches ein zweites Magazin für Werkzeuge bereitstellt.

In dem Scheibenlager lassen sich eine Mehrzahl von Werkzeugen lagern. Ein Werkzeugaustausch an einer Werkzeugspindel erfolgt direkt durch Zugriff auf das Scheibenlager.

Es lassen sich dadurch kurze Werkzeugaustauschzeiten und damit kurze Span-zu-Span-Zeiten beispielsweise unterhalb von 3 s erreichen. Da in dem Scheibenlager eine Mehrzahl von Werkzeugen bereitstellbar sind, lassen sich auch bei komplexen Bearbeitungsvorgängen an Werkstücken, bei denen eine Mehrzahl von unterschiedlichen Werkzeugen notwendig sind, minimierte Werkzeugwechselzeiten erreichen.

Jeder Werkzeugspindel ist ein eigenes Scheibenlager zugeordnet. Wenn beispielsweise zwei Werkzeugspindeln vorhanden sind, dann sind zwei Scheibenlager vorgesehen. Dadurch ergibt sich eine zeiteffektive Werkstückbearbeitung, da insbesondere ein synchroner Werkzeugaustausch an den Werkzeugspindeln ermöglicht ist.

Ein Scheibenlager lässt sich auf einfache Weise in eine Werkzeugwechselposition bringen, indem derjenige Lagerplatz mit dem einzuwechselnden Werkzeug in eine Wechselposition gedreht wird.

Die Lagereinrichtung umfasst eine Umlauffördereinrichtung, welche insbesondere als Kettenförderer ausgebildet ist. Dadurch lässt sich eine Lagerkapazität über im Wesentlichen die gesamte Oberfläche der Lagereinrichtung erreichen. Durch eine Endlosausbildung über eine Umlauffördereinrichtung lassen sich auf einfache Weise Werkzeuge transportieren und beispielsweise dem mindestens einen Scheibenlager zuführen.

Insbesondere ist mindestens eine erste Werkzeugspindel vorgesehen, welche einem ersten Scheibenlager zugeordnet ist, und ist eine zweite Werkzeugspindel vorgesehen, welche einem zweiten Scheibenlager zugeordnet ist. Dadurch lässt sich ein hauptzeitparalleler synchroner Werkzeugwechsel auch bei einer Mehrzahl von Werkzeugspindeln durchführen.

Insbesondere bildet die Lagereinrichtung für Werkzeuge ein erstes Magazin für Werkzeuge und das mindestens eine Scheibenlager bildet ein zweites Magazin für Werkzeuge. Das erste Magazin ist ein Hintergrundmagazin, welches eine große Menge von Werkzeugen bereithält. Das zweite Magazin ist ein Werkzeugmagazin, welches einen effektiven Werkzeugaustausch mit einer Werkzeugspindel ermöglicht (mit kurzen Span-zu-Span-Zeiten), wobei das zweite Magazin auch noch eine Mehrzahl von Werkzeugen bereithalten kann, um auch komplexe Bearbeitungsvorgänge mit hauptzeitparallelem Werkzeugwechsel durchführen zu können.

Insbesondere ist eine Lagerkapazität für Werkzeuge des ersten Magazins größer als die Lagerkapazität des mindestens einen Scheibenlagers. Dadurch lässt sich zum einen eine große Anzahl von Werkzeugen an der Werkzeugmaschine lagern und zum anderen lässt sich ein zeiteffektiver Werkzeugwechsel über das zweite Magazin durchführen.

Bei einer Ausführungsform umfasst die Lagereinrichtung mindestens 30 Lagerplätze für Werkzeuge. Insbesondere umfasst die Lagereinrichtung mindestens 50 und vorzugsweise mindestens 80 Lagerplätze.

Bei einer weiteren Ausführungsform umfasst das mindestens eine Scheibenlager beispielhaft zwischen 5 und 15 Lagerplätze für Werkzeuge. Dadurch lässt sich der Durchmesser des Scheibenlagers gering halten.

Insbesondere weist die Lagereinrichtung einen Bereich mit Lagerplätzen auf, welcher oberhalb eines Arbeitsraums liegt, und weist einen Bereich auf, welcher neben dem Arbeitsraum liegt. Über den Bereich oberhalb des Arbeitsraums lassen sich dem mindestens einen Scheibenlager Werkzeuge bereitstellen. Über den Bereich neben dem Arbeitsraum lassen sich Werkzeuge der Lagereinrichtung zuführen und von dieser entnehmen. Beispielsweise lassen sich Werkzeuge manuell zuführen und entnehmen.

Wenn eine manuelle Zuführung vorgesehen ist, dann ist es besonders vorteilhaft, wenn der Bereich, welcher neben dem Arbeitsraum liegt, einen Abstand zu einem Untergrund hat, auf welchem das Maschinenbett aufsteht, welcher höchstens 1,5 m beträgt. Dadurch muss ein Werkzeug nicht "über Kopf" eines Bedieners gehoben werden. Grundsätzlich ist die Lagerkapazität umso höher, je kleiner der Abstand zu dem Boden ist. Ein kleiner Abstand kann auch bei einer automatischen Zuführung und Abführung von Werkzeugen vorteilhaft sein.

Beispielsweise hat die Lagereinrichtung in Draufsicht eine L-förmige Gestalt. Der Bereich oberhalb des Arbeitraums und der Bereich neben dem Arbeitsraum sind quer zueinander orientiert.

Es ist mindestens eine Übergabestation zwischen der Lagereinrichtung und dem mindestens einen Scheibenlager vorgesehen. Über die mindestens eine Übergabestation lässt sich der Transport von Werkzeugen zwischen der Lagereinrichtung und dem mindestens einen Scheibenlager durchführen.

Die mindestens eine Übergabestation ist zwischen der Lagereinrichtung und dem mindestens einen Scheibenlager beweglich. Durch eine Bewegung der mindestens einen Übergabestation lässt sich ein Transport zwischen der Lagereinrichtung und dem mindestens einen Scheibenlager durchführen.

Es ist dann günstig, wenn die mindestens eine Übergabestation zwei Aufnahmeplätze aufweist. Dadurch kann die Übergabestation beispielsweise gleichzeitig ein Werkzeug an dem einen Magazin abholen und an dem anderen Magazin abgeben.

Es ist in diesem Zusammenhang günstig, wenn jedem Scheibenlager eine eigene Übergabestation zugeordnet ist.

Die Übergabestation umfasst einen am Maschinengestell verschieblichen Schlitten, an welchem das mindestens eine Scheibenlager angeordnet ist. Es ist dann grundsätzlich möglich, dass ein direkter Austausch von Werkzeugen zwischen der Lagereinrichtung und dem Scheibenlager erfolgt, das heißt das Scheibenlager gibt ein Werkzeug direkt an die Lagereinrichtung ab bzw. holt es von dort direkt ab.

Das mindestens eine Scheibenlager ist an einem Schlitten angeordnet, welcher an dem Maschinengestell verschieblich ist und insbesondere in einer Richtung (Z-Richtung) parallel zu einer Erstreckungsrichtung der mindestens einen Werkzeugspindel verschiebblich ist. Es lässt sich dadurch eine Verschiebungsbewegung des mindestens einen Scheibenlagers relativ zu dem Maschinengestell erreichen. Dies kann vorteilhaft sein, um eine Übergabestation zu bilden. Alternativ oder zusätzlich kann über einen solchen verschieblichen Schlitten das mindestens eine Scheibenlager der mindestens einen Werkzeugspindel zugeführt werden, um einen Werkzeugaustausch zu erleichtern oder zu ermöglichen. Durch eine Beweglichkeit des Schlittens in der Längserstreckungsrichtung der mindestens einen Werkzeugspindel (in einer Z-Richtung) lässt sich auch eine Aushebebewegung erreichen.

Insbesondere ist der Schlitten mindestens in einer ersten Richtung quer zu einer Erstreckungsrichtung der mindestens einen Werkzeugspindel verschieblich und insbesondere in einer zweiten Richtung quer zur ersten Richtung und Erstreckungsrichtung verschieblich.

Es ist günstig, wenn eine Zwischenlagereinrichtung für Werkzeuge vorgesehen ist, welche in Kommunikation mit der Lagereinrichtung steht und in Kommunikation mit der mindestens einen Werkzeugspindel steht, wobei an der Zwischenlagereinrichtung mindestens eine Aushebeeinrichtung angeordnet ist, durch welche ein Werkzeug in einer Richtung parallel zu einer Werkzeugspindel-Erstreckungsrichtung verschieblich ist.

Durch eine solche Aushebeeinrichtung ist eine Z-Verschieblichkeit möglich, um insbesondere eine Fixierung eines Werkzeugs an einer Werkzeugspindel zu lösen bzw. durch eine Hubbewegung in der Gegenrichtung ein Werkzeug an einer Werkzeugspindel zu fixieren.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Teildarstellung eines Ausführungsbeispiels einer erfindungsgemäßen Werkzeugmaschine (ohne Verkleidung und mit einer Teildarstellung einer Lagereinrichtung), wobei Werkzeuge über eine Störkontur angedeutet sind;
- Figur 2: die Werkzeugmaschine gemäß Figur 1 in einer Seitenansicht;
- Figur 3: die Werkzeugmaschine gemäß Figur 1 in einer Vorderansicht;

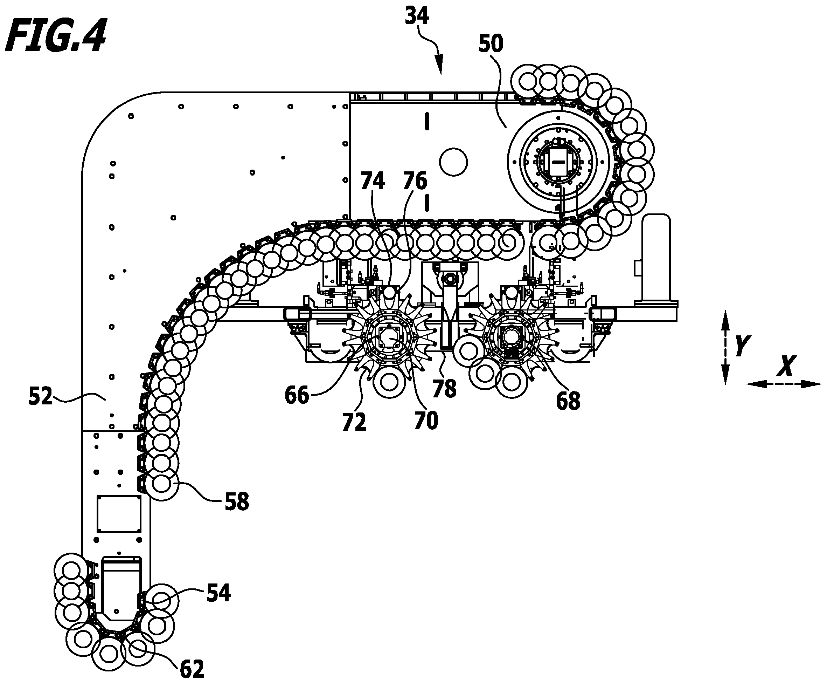

- Figur 4: ein Ausführungsbeispiel einer Lagereinrichtung (erstes Magazin) mit Lagerscheiben (zweites Magazin) bei der Werkzeugmaschine gemäß Figur 1;

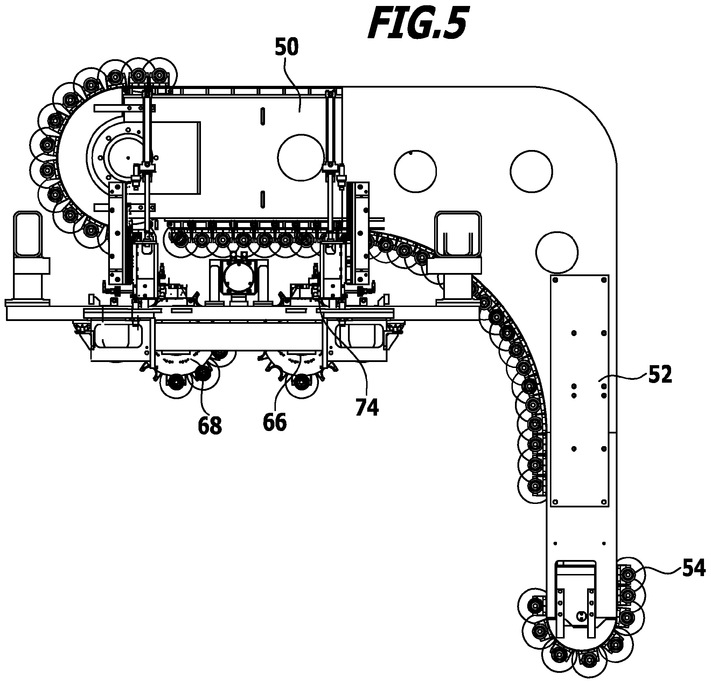

- Figur 5: eine Ansicht des Lagersystems gemäß Figur 5 von einer anderen Seite her.

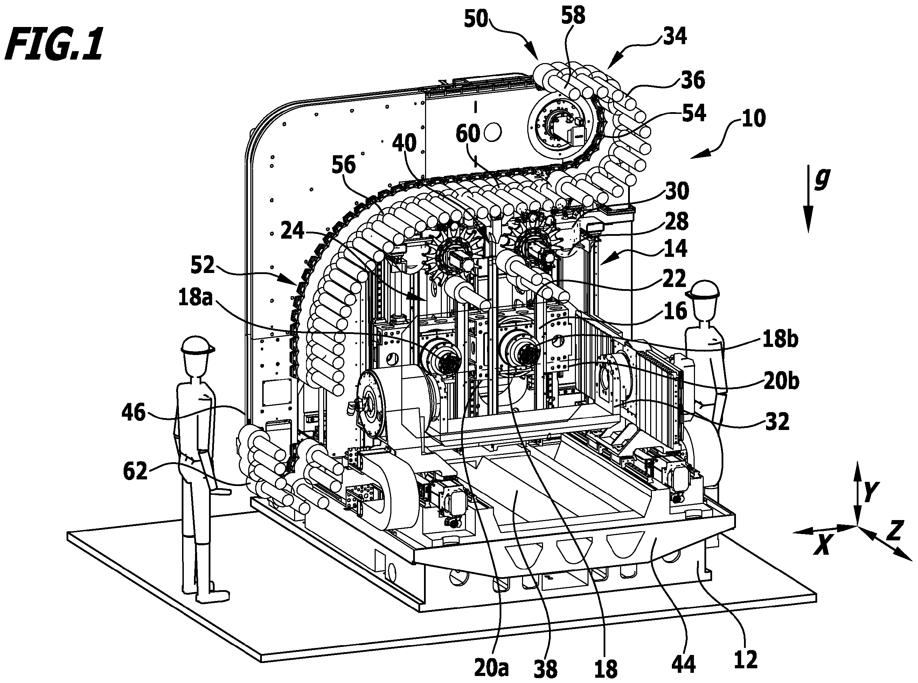

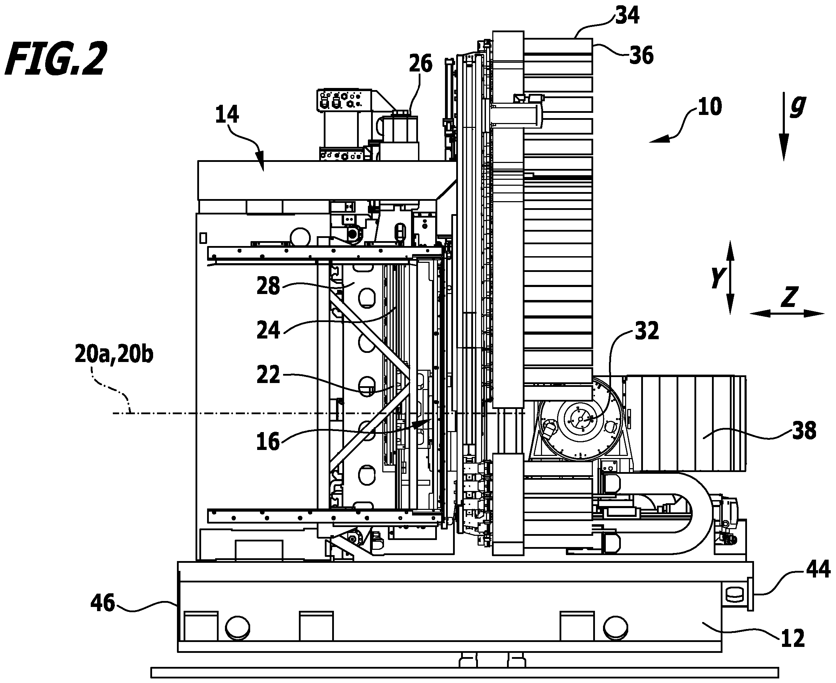

Ein Ausführungsbeispiel einer Werkzeugmaschine ist ein Bearbeitungszentrum. Eine Ausführungsform eines Bearbeitungszentrums, welches in den Figuren 1 bis 3 in Teildarstellung (ohne Verkleidung) schematisch gezeigt und dort mit 10 bezeichnet ist, umfasst ein Maschinenbett 12, an welchem ein Maschinengestell 14 angeordnet ist. Das Maschinengestell 14 ist portalartig ausgebildet und ragt in einer bezogen auf die Schwerkraftrichtung g vertikalen Richtung über das Maschinenbett 12 hinaus. An dem Maschinengestell 14 ist eine Werkzeugträgereinrichtung 16 gehalten, welche mindestens eine Werkzeugspindel 18 umfasst.

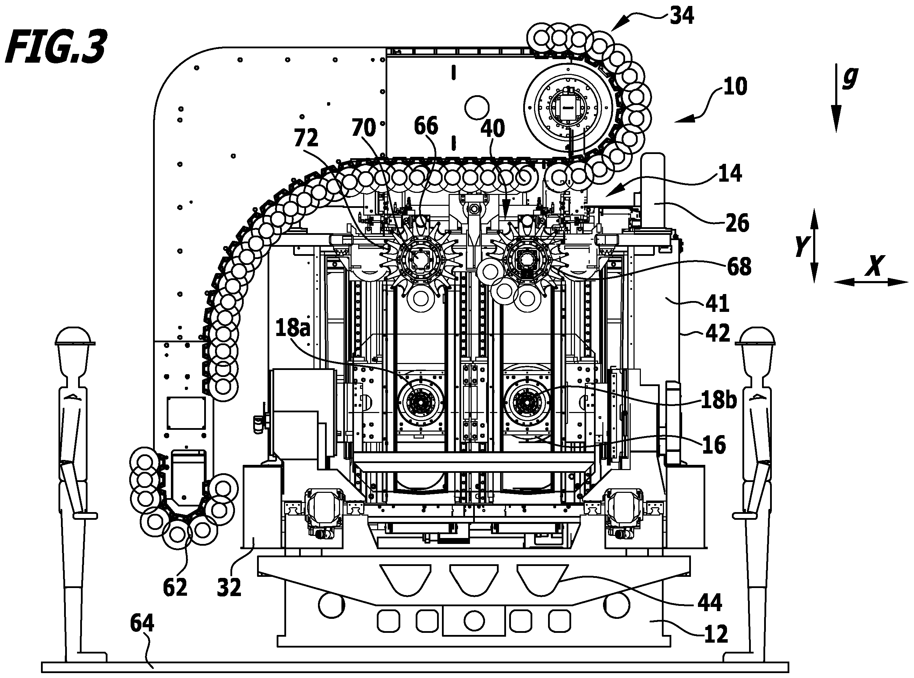

Bei dem gezeigten Ausführungsbeispiel umfasst die Werkzeugträgereinrichtung 16 eine erste Werkzeugspindel 18a und eine zweite Werkzeugspindel 18b. Ein an den jeweiligen Werkzeugspindeln 18a, 18b gehaltenes Werkzeug ist um eine Rotationsachse 20a, 20b rotierbar. Die Rotationsachsen 20a, 20b liegen parallel zueinander. Sie sind parallel zu einer Z-Richtung orientiert, welche bei der Darstellung gemäß Figur 3 senkrecht zur Zeichenebene liegt. Die Z-Richtung ist bezogen auf die Schwerkraftrichtung g insbesondere eine horizontale Richtung.

Die Werkzeugträgereinrichtung 16 ist als Schlitten 22 ausgebildet, welcher an einer Schlittenführung 24 gehalten ist und über die Schlittenführung 24 in einer Y-Richtung (Richtung und Gegenrichtung) linear beweglich ist. Die Y-Richtung liegt quer und insbesondere senkrecht zur Z-Richtung. Bezogen auf die Schwerkraftrichtung g ist die Y-Richtung insbesondere eine vertikale Richtung.

Zum Antrieb der Bewegung des Schlittens 22 in der Y-Richtung und zu dessen Positionierung ist dem Schlitten 22 eine Antriebseinrichtung 26 zugeordnet. Diese kann beispielsweise einen Kugelgewindetrieb oder einen Linearmotor umfassen.

Der Schlitten 22 ist selber an einem Schlitten 28 gehalten, welcher in einer X-Richtung (Richtung und Gegenrichtung) an einer Schlittenführung 30 linear verschieblich ist. Zur Verschiebung und Positionierung ist ein entsprechender Antrieb vorgesehen. Die X-Richtung ist quer und insbesondere senkrecht zu der Y-Richtung und der Z-Richtung. Die X-Richtung ist bezogen auf die Schwerkraftrichtung g insbesondere eine horizontale Richtung.

An dem Maschinenbett 12 ist (mindestens) ein Werkstückträger 32 angeordnet. Die erste Werkzeugspindel 18a und die zweite Werkzeugspindel 18b und damit daran gehaltene Werkzeuge und der Werkstückträger 32 sind in der Z-Richtung (Richtung und Gegenrichtung) relativ zueinander beweglich. Ein an dem Werkstückträger 32 gehaltenes Werkstück und die Werkzeugspindel 18a bzw. 18b sind dadurch relativ zueinander in der X-Richtung als erste Richtung, der Y-Richtung als zweite Richtung und der Z-Richtung als dritte Richtung verschieblich.

Bei einem Ausführungsbeispiel sind die Werkzeugspindeln 18a, 18b in der Z-Richtung zur Bearbeitung eines Werkstücks nicht beweglich und der Werkstückträger 32 ist in der Z-Richtung verschieblich an dem Maschinenbett gehalten. Dem Werkstückträger 32 ist dazu ein Antrieb zugeordnet.

Es kann beispielsweise auch vorgesehen sein, dass der Werkstückträger 32 um eine beispielsweise vertikale und/oder horizontale Achse drehbar ist.

Ein entsprechendes Bearbeitungszentrum ist beispielsweise in der WO 2009/033920 A1 beschrieben.

Bei dem gezeigten Ausführungsbeispiel weist das Bearbeitungszentrum 10 eine Lagereinrichtung 34 für Werkzeuge 36 auf, welche mit einem Teilbereich oberhalb eines Arbeitsraums 38, in welchem Werkstücke bearbeitet werden, angeordnet ist. Die Werkzeuge 36 sind über ihre Störkontur (maximale äußeren Abmessungen) angedeutet.

Ferner ist eine Werkzeugwechseleinrichtung 40 vorgesehen, über welche Werkzeuge 36 an die Werkzeugspindeln 18a und 18b einsetzbar sind und von dieser entnehmbar sind.

Das Bearbeitungszentrum 10 kann auch nur eine einzige Werkzeugspindel umfassen oder mehr als zwei Werkzeugspindeln umfassen.

Das Bearbeitungszentrum 10 weist eine Steuerungseinrichtung 41 auf, welche mindestens teilweise in einem Schaltkasten 42 angeordnet ist. Über die Steuerungseinrichtung 41 lassen sich Abläufe der Werkstückbearbeitung steuern.

Das Bearbeitungszentrum 10 hat eine Vorderseite 44 und eine Rückseite 46. Der Arbeitsraum 38 weist zu der Vorderseite 44 zu.

Die Lagereinrichtung 34 ist Teil eines Lagersystems 48. Die Lagereinrichtung 34, welche an dem Maschinengestell 14 angeordnet ist, umfasst einen ersten Bereich 50, welcher oberhalb des Arbeitsraums 38 angeordnet ist. Ferner umfasst die Lagereinrichtung 34 einen zweiten Bereich 52, welcher seitlich neben dem Arbeitsraum angeordnet ist. Die Lagereinrichtung 34 hat eine in der Draufsicht L-förmige Gestalt. Sie umfasst eine Umlauffördereinrichtung 54, welche insbesondere als Kettenförderer ausgebildet ist. An der Umlauffördereinrichtung 54 sind Lagerplätze 56 angeordnet, wobei ein Lagerplatz 56 jeweils ein Werkzeug 58 aufnehmen kann. Ein Lagerplatz 56 weist eine entsprechende Schnittstelle beispielsweise für eine HSK-Aufnahme auf. Durch die Umlauffördereinrichtung 54 lassen sich die Lagerplätze 56 und damit auch Werkzeuge 58 in einem geschlossenen Umlauf transportieren. Es lassen sich dadurch Werkzeuge 58 in einem Bereich 60 oberhalb (bezogen auf die Schwerkraftrichtung g) des Arbeitsraums 38 den Werkzeugspindeln 18a, 18b bereitstellen.

Der zweite Bereich 52 der Lagereinrichtung 34 hat an einer Unterseite 62 einen Abstand zu einem Boden 64 (vergleiche insbesondere Figur 3), welcher höchstens 1,5 m beträgt. Dadurch kann in der Nähe der Unterseite 62 ein Bediener die Lagereinrichtung 34 beladen bzw. entladen, das heißt es können dort insbesondere manuell Werkzeuge ausgetauscht werden. Es ist beispielsweise auch möglich, dass dem zweiten Bereich 52 ein eigene Werkzeugbeladestation/Werkzeugentladestation zugeordnet ist, durch die automatisch die Lagereinrichtung 34 beladbar und entladbar ist.

Die Lagereinrichtung 34 bildet ein erstes Magazin für Werkzeuge für die Werkzeugmaschine 10. Sie weist eine Vielzahl von Lagerplätzen 56 auf. Insbesondere weist sie mehr als dreißig Lagerplätze auf. Bei einem Ausführungsbeispiel weist die erste Lagereinrichtung 34 zweiundneunzig Lagerplätze 56 auf.

Das Lagersystem 48 umfasst ferner ein erstes Scheibenlager 66 und ein zweites Scheibenlager 68. Das erste Scheibenlager 66 ist der ersten Werkzeugspindel 18a zugeordnet und das zweite Scheibenlager 68 ist der zweiten Werkzeugspindel 18b zugeordnet.

Die Scheibenlager 66, 68 sind jeweils um eine Achse 70 drehbar an dem Maschinengestell 14 angeordnet. Die Drehachse 70 ist dabei parallel zu der Z-Richtung ausgerichtet.

Das erste Scheibenlager 66 und das zweite Scheibenlager 68 sind in der X-Richtung beabstandet zueinander. Dieser Abstand zwischen dem ersten Scheibenlager 66 und dem zweiten Scheibenlager 68 ist insbesondere fest.

Das erste Scheibenlager 66 und das zweite Scheibenlager 68 sind zwischen dem Arbeitsraum 38 und dem ersten Bereich 50 der Lagereinrichtung 34 angeordnet. Sie sind insbesondere unterhalb des ersten Bereichs 50 der Lagereinrichtung 34 und oberhalb des Arbeitsraums 38 positioniert. Das erste Scheibenlager 66 und das zweite Scheibenlager 68 stehen jeweils in Kommunikation mit der Lagereinrichtung 34 (und zwar mit dem ersten Bereich 50 dort) und mit der zugeordneten Werkzeugspindel 18a bzw. 18b.

Ein Scheibenlager 66 bzw. 68 weist eine Mehrzahl von Lagerplätzen 72 auf, welche an einer kreisförmigen Scheibe angeordnet sind. Ein Lagerplatz 72 umfasst beispielsweise eine HSK-Schnittstelle. Die Lagerplätze 72 sind dabei umfänglich um das jeweilige Scheibenlager 66 bzw. 68 verteilt und zwar derart, dass von außen ein an einem Lagerplatz 72 gelagertes Werkzeug entnommen werden kann.

Die Scheibenlager 66 und 68 bilden ein zweites Magazin (Puffermagazin) für Werkzeuge, wobei die Anzahl der Lagerplätze 72 des erstes Scheibenlagers 66 und des zweiten Scheibenlagers 68 jeweils kleiner ist als die Anzahl der Lagerplätze 56 der Lagereinrichtung 34. Beispielsweise weist das erste Scheibenlager 66 und das zweite Scheibenlager 68 jeweils eine Anzahl von zehn Lagerplätzen 72 auf.

Insbesondere sind das erste Scheibenlager 66 und das zweite Scheibenlager 68 gleich ausgebildet.

Es ist (mindestens) eine Übergabestation 74 vorgesehen, welche zur Übertragung von Werkzeugen zwischen der Lagereinrichtung 34 und dem jeweiligen Scheibenlager 66, 68 dient. Die Übergabestation 74 umfasst dabei mindestens einen Platz 76 für ein Werkzeug. Über diesen Platz 76 lässt sich ein Werkzeug an dem entsprechenden Scheibenlager 66, 68 aufnehmen und an die Lagereinrichtung 34 (an den ersten Bereich 50 dort) transportieren bzw. umgekehrt lässt sich ein Werkzeug von der Lagereinrichtung 34 nehmen und dann zu dem entsprechenden Scheibenlager 66 bzw. 68 transportieren.

Bei einem Ausführungsbeispiel umfasst die Übergabestation 74 zwei Plätze 76, sodass gleichzeitig zwei Werkzeuge aufgenommen werden können.

Die Übergabestation 74 ist beweglich ausgestaltet, um eine Übergabe zwischen der Lagereinrichtung 34 und dem jeweiligen Scheibenlager 66, 68 zu ermöglichen.

Die Übergabestation 74 umfasst einen Schlitten für eine Linearbewegung zwischen dem ersten Bereich 50 der Lagereinrichtung 34 und dem entsprechenden Scheibenlager 66, 68.

Insbesondere ist dem ersten Scheibenlager 66 und dem zweiten Scheibenlager 68 jeweils eine eigene Übergabestation 74 zugeordnet.

Auch wenn Übergabestationen 74 vorgesehen sind, sind das erste Scheibenlager 66 und das zweiten Scheibenlager 68 an einem Schlitten 78 angeordnet, welcher in der Y-Richtung beweglich ist. Dadurch lässt sich der Schlitten 78 mit dem ersten Scheibenlager 66 und dem zweiten Scheibenlager 68 den Werkzeugspindeln 18a, 18b zuführen.

Die erfindungsgemäße Werkzeugmaschine funktioniert bezüglich Werkzeugwechseln wie folgt:
Die erste Lagereinrichtung 34 bildet ein Hintergrundmagazin (erstes Magazin) für Werkzeuge. Durch die Scheibenlager 66, 68, wobei jeweils genau ein Scheibenlager einer Werkzeugspindel zugeordnet ist (das erste Scheibenlager 66 ist der ersten Werkzeugspindel 18a zugeordnet und das zweite Scheibenlager 68 ist der zweiten Werkzeugspindel 18b zugeordnet), ist ein Pufferspeicher für Werkzeuge gebildet, wobei die Übergabestation oder Übergabestationen 74 für eine Übergabe von Werkzeugen zwischen der Lagereinrichtung 34 und den Scheibenlagern 66, 68 sorgen. Die Werkzeugspindeln 18a, 18b holen Werkzeuge an den Scheibenlagern 66, 68 ab bzw. liefern dort Werkzeuge ab. (Der Ablieferungsvorgang bzw. Abholvorgang kann dabei aktiv durch die Werkzeugspindeln 18a, 18b durchgeführt werden, indem diese an die Scheibenlager 66, 68 heranfahren, oder es ist grundsätzlich ein passiver Vorgang möglich, indem, wenn die Scheibenlager 66, 68 an dem Schlitten 78 angeordnet sind, der Schlitten 78 an die Werkzeugspindeln 18a, 18b heranfährt. Es ist auch eine kombinierte aktivische Anfahrung sowohl der Werkzeugspindeln 18a, 18b als auch des Schlittens 78 möglich.)

Die jeweiligen Scheibenlager 66, 68 nehmen eine geringere Anzahl von Werkzeugen auf als die Lagereinrichtung 34.

Grundsätzlich weist das Lagersystem 48 mit dem Hintergrundmagazin (die Lagereinrichtung 34) um den Pufferspeicher (dem ersten Scheibenlager 66 und dem zweiten Scheibenlager 68) eine große Kapazität zur Aufnahme von Werkzeugen auf. Da in den Scheibenlagern 66, 68 eine größere Anzahl von Werkzeugen vorgehalten werden können und diese direkt am Rand des Arbeitsraums 38 liegen, lässt sich auch bei komplexeren Bearbeitungsvorgängen, bei denen mehrere Werkzeuge notwendig sind, eine kurze Bereitstellungszeit für Werkzeuge für die Werkzeugspindeln 18a, 18b realisieren. Es ergibt sich dabei eine kurze Span-zu-Span-Zeit von beispielsweise kleiner als 3 s.

Durch das Hintergrundmagazin 34 lässt sich auf einfache und schnelle Weise auch ein Werkzeugaustausch an den Scheibenlagern 66, 68 durchführen.

Da jeder Werkzeugspindel 18a, 18b ein und insbesondere genau ein Scheibenlager 66 bzw. 68 zugeordnet ist, lässt sich ein schneller Werkzeugwechsel auch vorsehen, wenn ein Werkzeugwechsel an mehreren Werkzeugspindeln insbesondere synchron erfolgen soll. Insbesondere lassen sich dadurch synchrone Bearbeitungsvorgänge an zwei Werkstücken innerhalb der gleichen Werkzeugmaschinen mit kurzen Span-zu-Span-Zeiten durchführen.

### Bezugszeichenliste

- 10: Bearbeitungszentrum
- 12: Maschinenbett
- 14: Maschinengestell
- 16: Werkzeugträgereinrichtung
- 18a: erste Werkzeugspindel
- 18b: zweite Werkzeugspindel
- 20a: Rotationsachse
- 20b: Rotationsachse
- 22: Schlitten
- 24: Schlittenführung
- 26: Antriebseinrichtung
- 28: Schlitten
- 30: Schlittenführung
- 32: Werkstückträger
- 34: Lagereinrichtung
- 36: Werkzeug
- 38: Arbeitsraum
- 40: Werkzeugwechseleinrichtung
- 41: Steuerungseinrichtung
- 42: Schaltkasten
- 44: Vorderseite
- 46: Rückseite
- 48: Lagersystem
- 50: Erster Bereich
- 52: Zweiter Bereich
- 54: Umlauffördereinrichtung
- 56: Lagerplatz
- 58: Werkzeug
- 60: Bereich
- 62: Unterseite
- 64: Boden
- 66: Erstes Scheibenlager
- 68: Zweites Scheibenlager
- 70: Achse
- 72: Lagerplatz
- 74: Übergabestation
- 76: Platz
- 78: Schlitten

## Patentansprüche

1. Werkzeugmaschine, umfassend
- ein Maschinengestell (14),
- mindestens eine Werkzeugspindel (18a, 18b), welche an dem Maschinengestell (14) angeordnet ist und relativ zu diesem verschieblich ist, wobei die mindestens eine Werkzeugspindel (18a, 18b) sich in einer Erstreckungsrichtung (Z) erstreckt, zur Bearbeitung eines Werkstücks in einer ersten Richtung (X) quer zu der Erstreckungsrichtung (Z) und in einer zweiten Richtung (Y) quer zu der ersten Richtung (X) und der Erstreckungsrichtung (Z) verschieblich ist, und in der Erstreckungsrichtung (Z) nicht verschieblich ist,
- einen Werkstückträger (32), welcher in der Erstreckungsrichtung (Z) verschieblich an einem Maschinenbett (12) gehalten ist,
- eine Lagereinrichtung (34) für Werkzeuge (36), welche an dem Maschinengestell (14) angeordnet ist, wobei die Lagereinrichtung (34) eine Umlauffördereinrichtung (54) umfasst,
- mindestens ein an dem Maschinengestell (14) angeordnetes drehbares Scheibenlager (66; 68) für Werkzeuge, welches in Kommunikation mit der Lagereinrichtung (34) steht und in Kommunikation mit der mindestens einen Werkzeugspindel (18a; 18b) steht, wobei jeder Werkzeugspindel (18a; 18b) ein eigenes Scheibenlager (66; 68) zugeordnet ist,
- mindestens eine Übergabestation (74) zwischen der Lagereinrichtung (34) und dem mindestens einen Scheibenlager (66; 68), wobei die mindestens eine Übergabestation zwischen der Lagereinrichtung (34) und dem mindestens einen Scheibenlager (66; 68) beweglich ist, die mindestens eine Übergabestation (74) einen am Maschinengestell (14) verschieblichen Schlitten umfasst und das mindestens eine Scheibenlager (66; 68) an einem Schlitten (78) angeordnet ist, welcher an dem Maschinengestell (14) verschieblich ist und welcher in der Erstreckungsrichtung (Y) verschieblich ist.

2. Werkzeugmaschine nach Anspruch 1, **gekennzeichnet durch** mindestens eine erste Werkzeugspindel (18a), welcher ein erstes Scheibenlager (66) zugeordnet ist, und eine zweite Werkzeugspindel (18b), welcher ein zweites Scheibenlager (68) zugeordnet ist.

3. Werkzeugmaschine nach Anspruch 1 oder 2, **dadurch gekennzeichnet, dass** die Lagereinrichtung (34) für Werkzeuge ein erstes Magazin für Werkzeuge bildet und das mindestens eine Scheibenlager (66; 68) ein zweites Magazin für Werkzeuge bildet, und insbesondere, dass eine Lagerkapazität für Werkzeuge des ersten Magazins (34) größer ist als die Lagerkapazität des mindestens einen Scheibenlagers (66; 68).

4. Werkzeugmaschine nach einem der vorangehenden Ansprüche, **dadurch gekennzeichnet, dass** die Lagereinrichtung (34) mindestens 30 Lagerplätze (56) für Werkzeuge aufweist.

5. Werkzeugmaschine nach einem der vorangehenden Ansprüche, **dadurch gekennzeichnet, dass** das mindestens eine Scheibenlager (66; 68) zwischen fünf und fünfzehn Lagerplätze (72) für Werkzeuge aufweist.

6. Werkzeugmaschine nach einem der vorangehenden Ansprüche, **dadurch gekennzeichnet, dass** die Lagereinrichtung (34) einen Bereich (50) mit Lagerplätzen (56) aufweist, welcher oberhalb eines Arbeitsraums (38) liegt, und einen Bereich (52) aufweist, welcher neben dem Arbeitsraum (38) liegt, und insbesondere, dass der Bereich (52), welcher neben dem Arbeitsraum liegt, einen Abstand zu einem Untergrund (64) hat, auf welchem ein Maschinenbett (12) aufsteht, welcher höchstens 1,5 m beträgt.

7. Werkzeugmaschine nach einem der vorangehenden Ansprüche, **dadurch gekennzeichnet, dass** die Lagereinrichtung (34) in Draufsicht eine L-förmige Gestalt hat.

8. Werkzeugmaschine nach einem der vorangehenden Ansprüche, **dadurch gekennzeichnet, dass** die Umlauffördereinrichtung (54) als Kettenförderer ausgebildet ist.

9. Werkzeugmaschine nach einem der vorangehenden Ansprüche, **dadurch gekennzeichnet, dass** die mindestens eine Übergabestation (74) mindestens zwei Aufnahmeplätze (76) hat.

10. Werkzeugmaschine nach einem der vorangehenden Ansprüche, **dadurch gekennzeichnet, dass** der Schlitten (78), an welchem das Scheibenlager angeordnet ist, mindestens in einer ersten Richtung (X; Y; Z) quer zu einer Erstreckungsrichtung (Z) der mindestens einen Werkzeugspindel (18a; 18b) verschieblich ist und insbesondere in einer zweiten Richtung quer zur ersten Richtung und der Erstreckungsrichtung (Z) der mindestens einen Werkzeugspindel (18a; 18b) verschieblich ist.

11. Werkzeugmaschine nach einem der vorangehenden Ansprüche, **dadurch gekennzeichnet, dass** an dem mindestens einen Scheibenlager (66; 68) eine Aushebeeinrichtung (78; 98) angeordnet ist, durch welche ein Werkzeug in einer Richtung parallel zu der Werkzeugspindelerstreckungsrichtung (Z) verschieblich ist.

## Claims

1. Machine tool comprising a machine frame (14),
- at least one tool spindle (18a; 18b) which is arranged on the machine frame (14) and is displaceable relative thereto, wherein the at least one tool spindle (18a, 18b) extends in a direction of extent (Z), for working a workpiece is displaceable in a first direction(X) transverse to the direction of extent (Z) and in a second direction (Y) transverse to the first direction (X) and the direction of extent (Z), and is not displaceable in the direction of extent (Z),
- a workpiece holder (32) which is held displaceably in the direction of extent (Z) on a machine bed (12),
- a storage device (34) for tools (36) which is arranged on the machine frame (14), wherein the storage device (34) comprises a circulating conveyor (54),
- arranged on the machine frame (14) at least one rotatable disk-type storage unit (66; 68) for tools, which communicates with the storage device (34) and communicates with the at least one tool spindle (18a; 18b), wherein a separate disk-type storage unit (66; 68) is associated with each tool spindle (18a; 18b),
- at least one transfer station (74) between the storage device (34) and the at least one disk-type storage unit (66; 68), wherein the at least one transfer station is movable between the storage device (34) and the at least one disk-type storage unit (66; 68), the at least one transfer station (74) comprises a carriage which is displaceable on the machine frame (14) and the at least one disk-type storage unit (66; 68) is arranged on a carriage (78) which is displaceable on the machine frame (14) and which is displaceable in the direction of extent (Y).

2. Machine tool according to claim 1, **characterised by** at least one first tool spindle (18a) with which a first disk-type storage unit (66) is associated and a second tool spindle (18b) with which a second disk-type storage unit (68) is associated.

3. Machine tool according to claim 1 or 2, **characterised in that** the storage device (34) for tools constitutes a first magazine for tools and the at least one disk-type storage unit (66; 68) constitutes a second magazine for tools, and, in particular, **in that** a storage capacity of the first magazine (34) for tools is greater than the storage capacity of the at least one disk-type storage unit (66; 68).

4. Machine tool according to one of the preceding claims, **characterised in that** the storage device (34) has at least 30 storage spaces (56) for tools.

5. Machine tool according to one of the preceding claims, **characterised in that** the at least one disk-type storage unit (66; 68) has between five and fifteen storage spaces (72) for tools.

6. Machine tool according to one of the preceding claims, **characterised in that** the storage device (34) has a region (50) with storage spaces (56) which lies above a working space (38) and has a region (52) which lies beside the working space (38), and, in particular, **in that** the region (52) which lies beside the working space is at a spacing of not more than 1.5 m from a foundation (64) on which a machine bed (12) stands.

7. Machine tool according to one of the preceding claims, **characterised in that** the storage device (34) has an L-shaped form in plan view.

8. Machine tool according to one of the preceding claims, **characterised in that** the circulating conveyor (54) is configured as a chain conveyor.

9. Machine tool according to one of the preceding claims, **characterised in that** the at least one transfer station (74) has at least two receiving spaces (76).

10. Machine tool according to one of the preceding claims, **characterised in that** the carriage (78) on which the disk-type storage unit is arranged is displaceable at least in a first direction (X; Y; Z) transversely to a direction of extent (Z) of the at least one tool spindle (18a; 18b) and, in particular, is displaceable in a second direction transversely to the first direction and the direction of extent (Z) of the at least one tool spindle (18a; 18b).

11. Machine tool according to one of the preceding claims, **characterised in that** on the at least one disk-type storage unit (66, 68) there is arranged a lifting-out device (78; 98), by means of which a tool is displaceable in a direction parallel to the tool spindle direction of extent (Z).

## Revendications

1. Machine-outil, comprenant
- un bâti de machine (14),
- au moins une broche porte-outil (18a, 18b), laquelle est disposée au niveau du bâti de machine (14) et est mobile par rapport à celui-ci, dans lequel l'au moins une broche porte-outil (18a, 18b) s'étend dans une direction d'extension (Z), pour l'usinage d'une pièce dans une première direction (X) transversalement à la direction d'extension (Z) et dans une deuxième direction (Y) transversalement à la première direction (X) et à la direction d'extension (Z), et n'est pas mobile dans la direction d'extension (Z),
- un porte-pièce (32), lequel est retenu au niveau d'un socle de machine (12) de manière mobile dans la direction d'extension (Z),
- un dispositif de stockage (34) pour outils (36), lequel est disposé au niveau du bâti de machine (14), dans laquelle le dispositif de stockage (34) comprend un dispositif transporteur continu (54),
- au moins un stockage à disque (66 ; 68) rotatif pour outils disposé au niveau du bâti de machine (14), lequel est en communication avec le dispositif de stockage (34) et est en communication avec l'au moins une broche porte-outil (18a ; 18b), dans laquelle un stockage à disque (66 ; 68) propre est associé à chaque broche porte-outil (18a ; 18b),
- au moins une station de transfert (74) entre le dispositif de stockage (34) et l'au moins un stockage à disque (66 ; 68), dans laquelle l'au moins une station de transfert est déplaçable entre le dispositif de stockage (34) et l'au moins un stockage à disque (66 ; 68), l'au moins une station de transfert (74) comprend un coulisseau mobile au niveau du bâti de machine (14) et l'au moins un stockage à disque (66 ; 68) est disposé au niveau d'un coulisseau (78), lequel est mobile au niveau du bâti de machine (14) et lequel est mobile dans la direction d'extension (Y).

2. Machine-outil selon la revendication 1, **caractérisée par** au moins une première broche porte-outil (18a), à laquelle est associé un premier stockage à disque (66), et une deuxième broche porte-outil (18b), à laquelle est associé un deuxième stockage à disque (68) .

3. Machine-outil selon la revendication 1 ou 2, **caractérisée en ce que** le dispositif de stockage (34) pour outils forme un premier magasin pour outils et l'au moins un stockage à disque (66 ; 68) forme un deuxième magasin pour outils, et en particulier **en ce qu'**une capacité de stockage pour outils du premier magasin (34) est supérieure à la capacité de stockage de l'au moins un stockage à disque (66 ; 68).

4. Machine-outil selon l'une quelconque des revendications précédentes, **caractérisée en ce que** le dispositif de stockage (34) présente au moins 30 emplacements de stockage (56) pour outils.

5. Machine-outil selon l'une quelconque des revendications précédentes, **caractérisée en ce que** l'au moins un stockage à disque (66 ; 68) présente entre cinq et quinze emplacements de stockage (72) pour outils.

6. Machine-outil selon l'une quelconque des revendications précédentes, **caractérisée en ce que** le dispositif de stockage (34) présente une zone (50) avec des emplacements de stockage (56), laquelle se situe au-dessus d'un espace de travail (38), et une zone (52), laquelle se situe à côté de l'espace de travail (38), et en particulier **en ce que** la zone (52) qui se situe à côté de l'espace de travail possède un écart par rapport à un sol (64) sur lequel repose un socle de machine (12), lequel atteint au plus 1,5 m.

7. Machine-outil selon l'une quelconque des revendications précédentes, **caractérisée en ce que** le dispositif de stockage (34) a une configuration en forme de L en vue en élévation.

8. Machine-outil selon l'une quelconque des revendications précédentes, **caractérisée en ce que** le dispositif transporteur continu (54) est réalisé en tant que transporteur à chaînes.

9. Machine-outil selon l'une quelconque des revendications précédentes, **caractérisée en ce que** l'au moins une station de transfert (74) a au moins deux emplacements de logement (76).

10. Machine-outil selon l'une quelconque des revendications précédentes, **caractérisée en ce que** le coulisseau (78), au niveau duquel le stockage à disque est disposé, est mobile au moins dans une première direction (X ; Y ; Z) transversalement à une direction d'extension (Z) de l'au moins une broche porte-outil (18a ; 18b) et en particulier dans une deuxième direction transversale à la première direction et à la direction d'extension (Z) de l'au moins une broche porte-outil (18a ; 18b).

11. Machine-outil selon l'une quelconque des revendications précédentes, **caractérisée en ce qu'**un dispositif de soulèvement (78 ; 98), au moyen duquel un outil est mobile dans une direction parallèle à la direction d'extension (Z) de broche porte-outil, est disposé au niveau de l'au moins un stockage à disque (66 ; 68).
